# EUROPÄISCHE PATENTSCHRIFT

(11) **EP 3 601 992 B1**
(45) Veröffentlichungstag und Bekanntmachung des Hinweises auf die Patenterteilung: **22.09.2021**
(21) Anmeldenummer: 18718382.7
(22) Anmeldetag: 19.03.2018
(51) Int. Cl.: G01M 17/007

(54) **MOTORRADPRÜFSTAND**
TEST BENCH FOR MOTOR CYCLE
BANC D'ESSAI POUR MOTOCYCLETTE

(30) Priorität: 21.03.2017 AT 502302017
(43) Veröffentlichungstag der Anmeldung: 05.02.2020
(73) Patentinhaber: AVL List GmbH, 8020 Graz (AT)
(72) Erfinder: GRUBER, Hannes, 8010 Graz (AT); EITZINGER, Johann, 8010 Graz (AT)
(74) Vertreter: Babeluk, Michael
(86) Internationale Anmeldenummer: PCT/AT2018/050003
(87) Internationale Veröffentlichungsnummer: WO 2018/170523

(56) Entgegenhaltungen:
- EP-A1- 0 498 648
- WO-A1-2005/091250
- US-A- 3 686 776
- US-A- 4 196 617

## Beschreibung

Die Erfindung betrifft einen Motorradprüfstand mit mindestens einem, mit einer Antriebskette eines zu prüfenden Motorrads verbindbaren Dynamometer und einer Aufnahme für einen Motorradrahmen, wobei das Dynamometer und die Aufnahme an einem Boden des Motorradprüfstandes fixiert sind.

Üblicherweise erfolgt die Anbindung des Dynamometers zur Leistungsmessung direkt über das Motorradritzel. Die Kette wird dabei nicht miteinbezogen. Das hat zur Folge, dass über die hochdynamische Kette bei diesen Versuchsanordnungen keine Aussagen getroffen werden können.

Typischerweise werden Motorräder entweder auf Rollenprüfständen getestet, oder das Motorradritzel wird direkt mit einem Dynamometer verbunden und belastet.

Bei Rollenprüfständen besteht das Problem, dass beispielsweise Verluste über die Reifen beziehungsweise das Rutschen der Räder auf den Rollen des Rollenprüfstandes Fehler in der Bewertung des zu prüfenden Motorrades ergeben. Durch die Rollen entstehen darüber hinaus unerwünschte Schwingungen während des Tests, die die Testergebnisse verfälschen.

Die WO 2005/091250 A1 zeigt einen Rollenprüfstand für das Üben von Wheelies. Das Zweirad wird dabei durch eine Aufnahme in Position gehalten. Über einen Verbindungspunkt wird das Fahrzeug mit der Vorrichtung verbunden. Dabei wird der Verbindungspunkt durch ein Gelenk gebildet. Es ist ein Messinstrument zur Kontrolle der Kraft vom Motorrad und zur Regelung der Rollen vorgesehen. Durch die Rollen werden störende Einflüsse auf das Motorrad und die Messinstrumente eingebracht. Die US 3 686 776 A zeigt einen ähnlich gestalteten Rollenprüfstand.

Aus der EP 0 498 648 A1 ist ein Prüfstand zur Durchführung von Schwingungstest am Motorrad bekannt. Dabei ist für Vorderachse und Hinterachse je ein Schwingungsanreger vorgesehen, der das Motorrad in Schwingung versetzt. Der gezeigte Prüfstand ist für Leistungsmessungen nicht geeignet.

Aus der US 4 196 617 A ist ein Motorradprüfstand bekannt, bei dem das Hinterrad entfernt wird und die Antriebskette über ein Getriebe mit einem Dynamometer verbunden wird und so beispielsweise eine Leistungsmessung durchgeführt wird. Dabei erfährt die Antriebskette nur durch das Dynamometer eine definierte Belastung und nicht durch die Hinterradschwinge. Es kann daher durch den gezeigten Prüfstand nicht die reale Belastung auf die Antriebskette nachempfunden werden. Weiters können zur Simulation einer Bergauffahrt mit dem gezeigten Motorradprüfstand die Kräfte nicht realitätsnah auf das Motorrad aufgebracht werden.

Aufgabe der vorliegenden Erfindung ist es, einen Motorradprüfstand anzugeben, der diese Nachteile beseitigt und bei welchem die Belastungen auf die Antriebskette am Motorradprüfstand den Belastungen bei realer Fahrt entsprechen.

Diese Aufgabe wird durch einen eingangs erwähnten Motorradprüfstand erfindungsgemäß nach Anspruch 1 dadurch gelöst, dass die Aufnahme einen ersten Verbindungspunkt und einen zweiten Verbindungspunkt zum Motorradrahmen aufweist. Dabei ist der erste Verbindungspunkt insbesondere ein Schwingenlager des Motorrads.

Dadurch wirkt auf die Antriebskette nicht nur das Dynamometer, sondern es kann auch die Kraft von der Hinterradschwinge auf die Antriebskette aufgebracht werden, da das Motorrad gegenüber dem Dynamometer beweglich ist, was mit fixierter Hinterradschwinge (wenn nur das Hinterrad entfernt wird und das Dynamometer mit der Antriebskette verbunden wird, bekannt aus dem Stand der Technik) nicht möglich ist.

Die vorliegende Erfindung macht es nun möglich, ein Motorrad über ein Dynamometer zu belasten und Aussagen über die Eigenschaften der Kette im Betrieb treffen zu können. Es ist so möglich, verschiedene Fahrmanöver wie beispielsweise eine Bergauffahrt, das Abheben des Vorderrads oder verschiedene Beladungssituationen zu simulieren, in dem durch einen Aktuator die dementsprechenden Kräfte auf das Motorrad aufgebracht werden.

Außerdem betrifft die Erfindung, wie in Anspruch 4 definiert, ein Verfahren zum Testen eines Motorrades auf einem Motorradprüfstand bei dem eine Antriebskette des Motorrades mit einem Dynamometer des Motorradprüfstandes verbunden wird und das Motorrad in einer Aufnahme des Motorradprüfstandes fixiert wird und das Motorrad durch Belastung mit dem Dynamometer getestet wird, wobei insbesondere durch einen Aktuator Kräfte und Momente während der Fahrt nachgebildet werden, wobei ein Motorradrahmen in einem ersten Verbindungspunkt in der Aufnahme gelagert wird und der Motorradrahmen in einem zweiten Verbindungspunkt mit der Aufnahme verbunden wird.

Dadurch entsteht der Vorteil, dass störende Einflüsse von Rollen nicht auftreten. Verluste durch das Rad und Rutschen treten nicht auf. Weiters können Einflüsse auf die Antriebskette und deren Verhalten, deren Dehnung und vieles mehr getestet werden. Außerdem kann aufgrund des Fehlens der Hinterradschwinge und des Hinterrades in einem frühen Entwicklungsstadium mit Tests begonnen werden, beziehungsweise das Zusammenspiel verschiedenster Komponenten beobachtet werden.

Relativbewegungen des Motorradrahmens zur Antriebskette und zur Hinterradschwinge können vorteilhafterweise einfach berücksichtigt werden, wenn der Motorradrahmen um den ersten Verbindungspunkt in der Aufnahme drehbar ist.

Dadurch ist die Antriebskette nahe den Bedingungen bei realer Fahrt testbar. Es wird so über den ersten Verbindungspunkt eine Bedingung geschaffen, die einer realen Schwinge des Motorrads gleichzusetzen ist und dennoch beispielsweise in einem sehr frühen Entwicklungsstadium bereits getestet werden kann, ohne einen kostspieligen Prototypen einer Schwinge bauen zu müssen.

Es ist günstig, wenn der Motorradprüfstand einen Prüfdämpfer und/oder eine Prüffeder von dem zweiten Verbindungspunkt aus zum Motorradrahmen aufweist. Dadurch können Einflüsse des Motorradprüfstandes auf das Motorrad berücksichtigt beziehungsweise eliminiert werden und das Ergebnis wird somit verbessert.

Es ist besonders günstig, wenn zumindest ein Ritzel des zu prüfenden Motorrades über eine Antriebskette und einem Kettenblatt direkt mit dem Dynamometer wirkungsverbunden ist.

Zur Nachbildung der Kräfte und Momente auf ein Vorderrad des Motorrads ist es günstig, wenn ein Vorderraddynamometer über eine vordere Aufnahme mit dem Motorradrahmen verbindbar ist.

Um auch Kräfte auf das Vorderrad berücksichtigen zu können, ist es günstig, wenn es entfernt wird, und dass danach der Motorradrahmen über eine vordere Aufnahme mit einem Vorderraddynamometer verbunden wird, und dass während des Test Kräfte und Momente auf das Vorderrad simuliert werden.

Die Erfindung wird anhand der nicht einschränkenden Figuren näher erläutert. Es zeigen:
- Fig. 1: Kräfte auf ein Motorrad bei realer Fahrt;
- Fig. 2: ein Motorrad mit einer deformierten Antriebskette bei realer Fahrt;
- Fig. 3: eine erste Ausführung eines erfindungsgemäßen Motorradprüfstandes; und
- Fig. 4: eine zweite Ausführung eines erfindungsgemäßen Motorradprüfstandes.

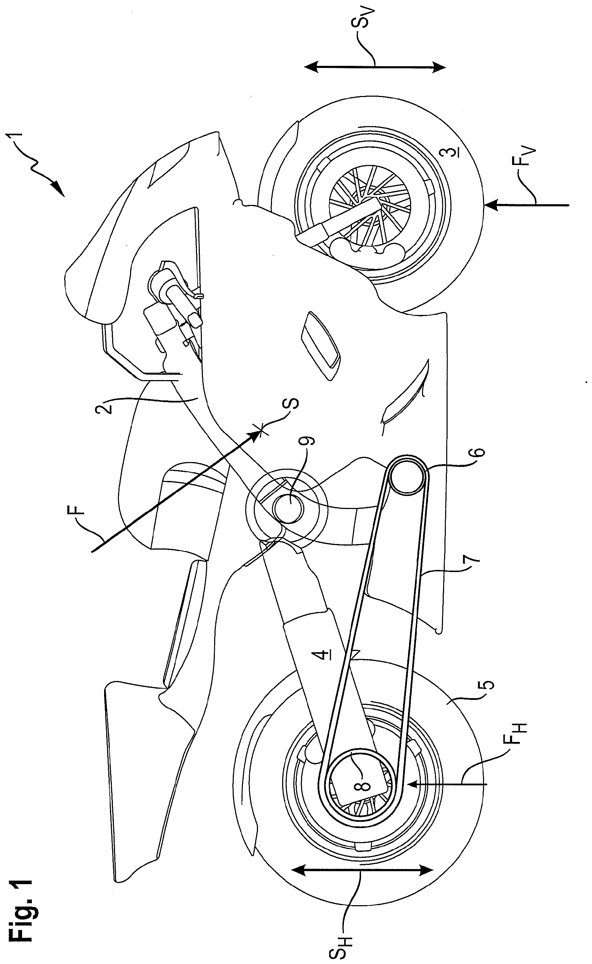

In Fig. 1 ist ein Motorrad 1 bei realer Fahrt gezeigt. Das Motorrad 1 weist einen Motorradrahmen 2, ein damit verbundenes Vorderrad 3 sowie eine mit dem Motorradrahmen 2 verbundene Hinterradschwinge 4 auf, die wiederrum mit dem Hinterrad 5 verbunden ist. Ein nicht gezeigter Motor ist über ein Ritzel 6, eine Antriebskette 7 und einem Kettenblatt 8 mit dem Hinterrad 5 wirkungsverbunden. Das Vorderrad 3 ist um einen vorderen Weg SV und das Hinterrad 5 ist um einen hinteren Weg SH verschiebbar, welcher in realer Fahrt durch Feder- und Dämpfelemente gewährleistet wird. Während der Fahrt wirkt durch Antrieb, Fahrwiderstand und andere Größen auf einen Schwerpunkt S eine resultierende Kraft F. Von einem Untergrund wirkt auf das Vorderrad 3 eine vordere Kraft FV und auf das Hinterrad 5 eine hintere Kraft FH.

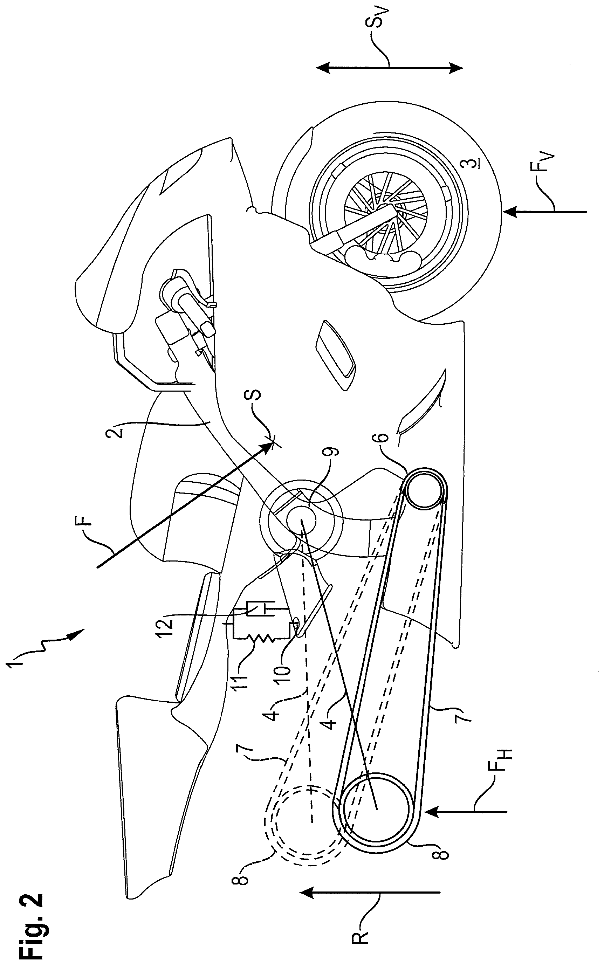

In Fig. 2 sind die Verschiebungen der Antriebskette 7 und der Hinterradschwinge 4 bei realer Fahrt gezeigt. Auf die Antriebskette 7 wirkt vom Hinterrad 5 und von der Hinterradschwinge 4 eine Resultierende R, welche von der Beschleunigung des Motorrades herrührt. Durch die Verschiebung und die auf die Antriebskette 7 wirkenden Kräfte ergeben sich Differenzen zwischen der realen Fahrt und den Messungen auf einem Prüfstand, wie er aus dem Stand der Technik bekannt ist.

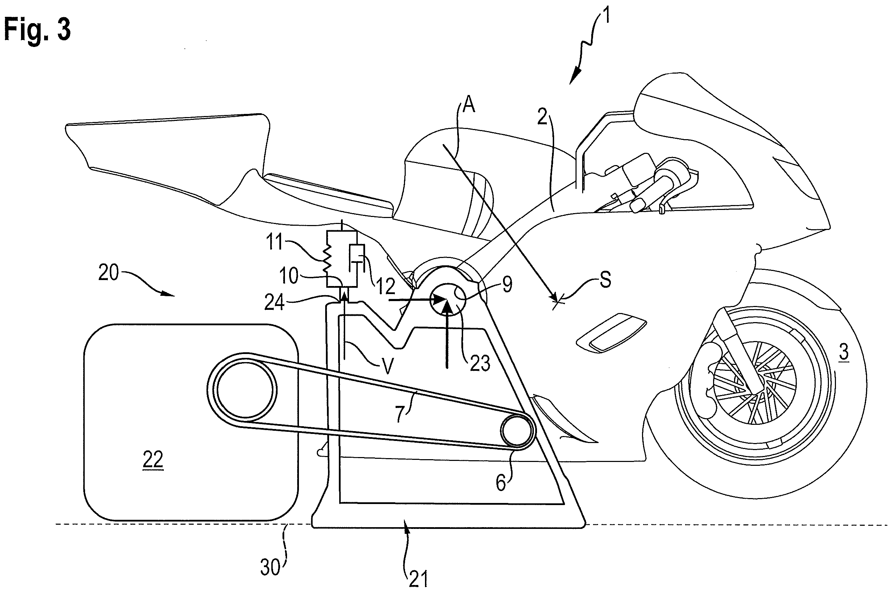

Diese Unterschiede treten bei einem in Fig. 3 gezeigten erfindungsgemäßen Motorradprüfstand 20 nicht auf. Der Motorradprüfstand 20 weist eine Aufnahme 21 für den Motorradrahmen 2 und ein Dynamometer 22 auf. Sowohl die Aufnahme 21, als auch das Dynamometer 22 sind an einem Boden (30) des Motorradprüfstandes (20) fixiert. Durch einen nicht gezeigten Aktuator sind äußere Kräfte A auf das Motorrad 1 aufbringbar.

Die Aufnahme 21 besitzt eine erste Aufnahmestelle 23 und eine zweite Aufnahmestelle 24. Die erste Aufnahmestelle 23 ist mit einem ersten Verbindungspunkt 9 und die zweite Aufnahmestelle 24 mit einem zweiten Verbindungspunkt 10 verbindbar. Der erste Verbindungspunkt 9 des Motorradrahmens 2 greift dort an, wo üblicherweise eine Hinterradschwinge 4 an den Motorradrahmen 2 angreifen würde. Beim erfindungsgemäßen Prüfstand wird die Aufnahme 21 des Motorradprüfstandes 20 an dieser Stelle mit dem Motorradrahmen 2 verbunden. Der erste Verbindungspunkt 9 ist ein Schwingenlager. Der zweite Verbindungspunkt 10 verbindet den Motorradrahmen 2 über ein Feder- 11 und/oder ein Dämpferelement 12 mit der Aufnahme 21 des Motorradprüfstandes 20.

In der ersten Aufnahmestelle 23 ist der Motorradrahmen 2 drehbar gelagert. Es werden eine vertikale und eine horizontale Verschiebung gesperrt. Auf die zweite Aufnahmestelle 24 wird über den Motorradrahmen 2 beziehungsweise über das Feder-11 und/oder Dämpferelement 12 eine vertikale Kraft V ausgeübt, welche einerseits von der Gewichtskraft des Motorrads, und andererseits von der Kraft, welche der Motor bei beispielsweise einer Beschleunigung aufbringt, abhängig ist. Die Antriebskette 7 ist mit dem Dynamometer 22 des Motorradprüfstandes 20 über ein Kettenblatt 8 verbindbar.

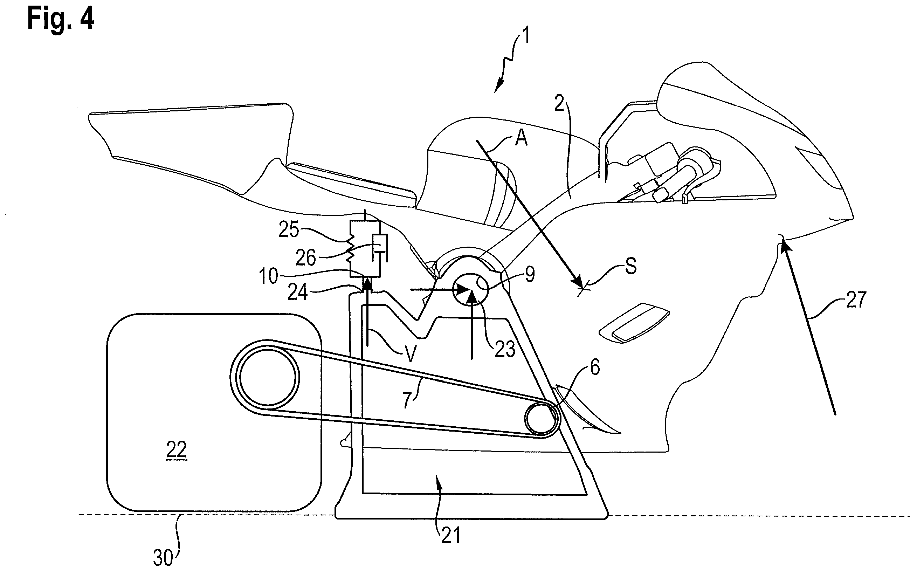

In Fig. 4 ist eine zweite Ausführung des Motorradprüfstandes 20 gezeigt. Dabei sind anstatt einem Feder- 11 und/oder einem Dämpferelement 12 des Motorrades 1 eine Prüffeder 25 und/oder ein Prüfdämpfer 26 des Motorradprüfstandes 20 vorgesehen. Anstatt mit dem Vorderrad 3 ist der Motorradrahmen 2 mit einem Vorderraddynamometer 27 (nicht gezeigt) einer vorderen Aufnahme verbunden.

Zum Test des Motorrades 1 wird das Motorrad 1, wie bereits in Fig. 3 gezeigt, ohne Hinterrad 5 und ohne Hinterradschwinge 4 in die Aufnahme 21 des Motorradprüfstandes 20 montiert. Der Motorradrahmen 2 wird mit seinem ersten Verbindungspunkt 9, seinem Schwingenlager und seinem zweiten Verbindungspunkt 10 mit der ersten Aufnahmestelle 23 und der zweiten Aufnahmestelle 24 der Aufnahme 21 des Motorradprüfstandes 20 verbunden.

Die Antriebskette 7 des Motorrades 1 wird mit dem Dynamometer 22 des Motorradprüfstandes 20 verbunden und zuletzt wird das Motorrad 1 mit dem Motorradprüfstand 20 getestet. Dabei wird vom Aktuator eine äußere Kraft A auf den Schwerpunkt S des Motorrades 1 eingebracht.

In einer alternativen Variante werden vor dem Test Feder- 11 und/oder Dämpferelemente 12 des Motorrades 1 durch Prüffeder 25 und Prüfdämpfer 26 ersetzt. Weiters ist es möglich, das Vorderrad 3 durch eine vordere Aufnahme zu ersetzen und das Motorrad 1 mit einem Vorderraddynamometer 27 zu belasten. Dadurch können Kräfte und Momente auf das Vorderrad 3 bei realer Fahrt nachgebildet werden.

## Patentansprüche

1. Motorradprüfstand (20) mit mindestens einem mit einer Antriebskette (7) eines zu prüfenden Motorrads (1) verbindbaren Dynamometer (22) und einer Aufnahme (21) für einen Motorradrahmen (2), wobei das Dynamometer (22) und die Aufnahme (21) an einem Boden (30) des Motorradprüfstandes (20) fixiert sind, **dadurch gekennzeichnet, dass** die Aufnahme (21) eine erste Aufnahmestelle (23) und eine zweite Aufnahmestelle (24) besitzt, wobei die erste Aufnahmestelle (23) mit einem ersten Verbindungspunkt (9) zum Motorradrahmen (2) und die zweite Aufnahmestelle (24) mit einem zweiten Verbindungspunkt (10) zum Motorradrahmen (2) verbindbar ist, wobei der Motorradrahmen (2) um die erste Aufnahmestelle (23) in der Aufnahme (21) drehbar gelagert ist und die erste Aufnahmestelle (23) an einem Angriffspunkt der Hinterradschwinge (4) an den Motorradrahmen (2) angreift, und dass der Motorradprüfstand (20) von der zweiten Aufnahmestelle (24) aus zum Motorradrahmen (2) einen Prüfdämpfer (26) und/oder eine Prüffeder (25) aufweist.

2. Motorradprüfstand (20) nach Anspruch 1, **dadurch gekennzeichnet, dass** zumindest ein Ritzel (6) des zu prüfenden Motorrades (1) über eine Antriebskette (7) und einem Kettenblatt (8) direkt mit dem Dynamometer (22) wirkungsverbunden ist.

3. Motorradprüfstand (20) nach Anspruch 1 oder 2, **dadurch gekennzeichnet, dass** ein Vorderraddynamometer (27) zur Nachbildung der Kräfte und Momente auf ein Vorderrad (3) des Motorrads (1) über eine vordere Aufnahme mit dem Motorradrahmen (2) verbindbar ist.

4. Verfahren zum Test des Motorrades (1) auf dem Motorradprüfstand (20), nach einem der Ansprüche 1 oder 2, bei dem die Antriebskette (7) des Motorrades (1) mit dem Dynamometer (22) des Motorradprüfstandes (20) verbunden wird und das Motorrad (1) in einer Aufnahme (21) des Motorradprüfstandes (20) fixiert wird und das Motorrad (1) durch Belastung mit dem Dynamometer (22) getestet wird, **dadurch gekennzeichnet, dass** der Motorradrahmen (2) in einem ersten Verbindungspunkt (9) in der Aufnahme (21) gelagert wird und der Motorradrahmen (2) in einem zweiten Verbindungspunkt (10) mit der Aufnahme (21) verbunden wird.

5. Verfahren nach Anspruch 3, **dadurch gekennzeichnet, dass** der Motorradrahmen (2) am ersten Verbindungspunkt (9) drehbar gelagert wird.

6. Verfahren nach Anspruch 3 oder 4, **dadurch gekennzeichnet, dass** das Motorrad (1) mit einem Prüfdämpfer (26) und/oder einer Prüffeder (25) mit dem zweiten Verbindungspunkt (10) des Motorradprüfstandes (20) verbunden wird.

7. Verfahren nach einem der Ansprüche 3 bis 5, **dadurch gekennzeichnet, dass** ein Vorderrad (3) entfernt wird, und dass danach der Motorradrahmen (2) über eine vordere Aufnahme mit einem Vorderraddynamometer (27) verbunden wird, und dass während des Tests Kräfte und Momente auf das Vorderrad (3) simuliert werden.

## Claims

1. Motorcycle test stand (20) having at least one dynamometer (22) which can be connected to a drive chain (7) of a motorcycle (1) to be tested and a receptacle (21) for a motorcycle frame (2), wherein the dynamometer (22) and the receptacle (21) are fixed to a base (30) of the motorcycle test stand (20), **characterised in that in that** the receptacle (21) has a first receiving point (23) and a second receiving point (24), wherein the first receiving point (23) is connectable with a first connecting point (9) to the motorcycle frame (2) and the second receiving point (24) with a second connecting point (10) to the motorcycle frame (2), wherein the motorcycle frame (2) is rotatably mounted about the first receiving point (23) in the receptacle (21) and the first receiving point (23) engages the motorcycle frame (2) at a point of engagement of the rear swing arm (4), and **in that** the motorcycle test stand (20) has a test damper (26) and/or a test spring (25) from the second receiving point (24) to the motorcycle frame (2).

2. Motorcycle test stand (20) according to claim 1, **characterised in that** at least one sprocket (6) of the motorcycle (1) to be tested is operatively connected directly to the dynamometer (22) via a drive chain (7) and a chainring (8).

3. Motorcycle test stand (20) according to claim 1 or 2, **characterised in that** a front wheel dynamometer (27) for simulating the forces and moments on a front wheel (3) of the motorcycle (1) can be connected to the motorcycle frame (2) via a front receptacle.

4. Method for testing a motorcycle (1) on a motorcycle test stand (20), according to one of claims 1 or 2, in which the drive chain (7) of the motorcycle (1) is connected to the dynamometer (22) of the motorcycle test stand (20) and the motorcycle (1) is fixed in a receptacle (21) of the motorcycle test stand (20) and the motorcycle (1) is tested by loading with the dynamometer (22), **characterised in that** the motorcycle frame (2) is mounted in a first connecting point (9) in the receptacle (21) and the motorcycle frame (2) is connected to the receptacle (21) in a second connecting point (10).

5. Method according to claim 3, **characterised in that** the motorcycle frame (2) is rotatably mounted at the first connecting point (9).

6. Method according to claim 3 or 4, **characterised in that** the motorcycle (1) is connected with a test damper (26) and/or a test spring (25) to the second connecting point (10) of the motorcycle test stand (20).

7. Method according to one of claims 3 to 5, **characterised in that** a front wheel (3) is removed, and **in that** thereafter the motorcycle frame (2) is connected via a front receptacle to a front wheel dynamometer (27), and **in that** forces and moments on the front wheel (3) are simulated during the test.

## Revendications

1. Banc d'essai de moto (20) comportant au moins une chaîne d'entraînement (7) d'un dynamomètre (22) reliée à la moto (1) à essayer ainsi qu'un support (21) pour le cadre (2) de la moto, le dynamomètre (22) et le support (21) étant fixés au fond (30) du banc d'essai (20),
**caractérisé en ce que**
le support (21) a un premier point de réception (23) et un second point de réception (24),
le premier point de réception (23) étant relié à un premier point de liaison (9) du cadre (2) de la moto et le second point de réception (24) étant relié à un second point de liaison (10) du cadre de la moto (2),
le cadre de moto (2) étant monté à rotation autour du premier point de réception (23) dans le support (21) et ce premier point de réception (23) prend le cadre de moto (2) en un point de prise du bras de la roue arrière (4), et
le banc d'essai de moto (20) comporte un amortisseur d'essai (26) et/ou un ressort d'essai (25) entre le second point de réception (24) et le cadre de moto (2).

2. Banc d'essai de moto (20) selon la revendication 1,
caractérisé ce qu'
au moins un pignon (6) de la roue de moto (1) à essayer est relié par la chaîne d'entraînement (7) une roue à chaîne (8) directement au dynamomètre (22) par une liaison de coopération.

3. Banc d'essai de moto (20) selon la revendication 1 ou 2,
**caractérisé en ce que**
un dynamomètre de roue avant (27) est relié par un support avant au cadre de moto (2) pour simuler les efforts et couples exercés sur la roue avant (3) de la moto (1).

4. Procédé d'essai d'une moto (1) sur un banc d'essai (20) selon l'une des revendications 1 ou 2,
selon lequel
on relie la chaîne d'entraînement (7) de la moto (1) au dynamomètre (22) du banc d'essai de moto (20) et on fixe la moto (1) dans un support (21) du banc d'essai (20) et on teste la moto (1) après la mise en charge avec le dynamomètre (22),
procédé **caractérisé en ce que**
on monte le cadre de moto (2) dans un premier point de liaison (9) du support (21) et on relie le cadre de moto (2) à un second point de liaison (10) avec le support (21).

5. Procédé selon la revendication 3,
**caractérisé en ce que**
le cadre de moto (2) est monté à rotation sur le premier point de liaison (9).

6. Procédé selon la revendication 3 ou 4,
**caractérisé en ce qu'**
on relie la roue de moto (1) avec un amortisseur d'essai (26) et/ou un ressort d'essai (25) au second point de liaison (10) du banc d'essai de moto (20).

7. Procédé selon l'une des revendications 3 à 5,
**caractérisé en ce qu'**
on enlève la roue avant (3) et ensuite on relie le cadre de moto (2) par un support avant à un dynamomètre de roue avant (27) et pendant l'essai on simule les efforts et les couples exercés sur la roue avant (3).
